# EUROPÄISCHE PATENTSCHRIFT

(11) **EP 3 749 110 B1**
(45) Veröffentlichungstag und Bekanntmachung des Hinweises auf die Patenterteilung: **29.12.2021**
(21) Anmeldenummer: 19703685.8
(22) Anmeldetag: 05.02.2019
(51) Int. Cl.: A23L 27/30, A23L 2/60, A23G 3/42, A23G 4/10, A23G 9/34, A23L 21/10, A23C 9/13, A23C 9/156, A23L 33/20

(54) **FESTES FUNKTIONSVERBESSERTES ISOMALT**
SOLID FUNCTIONALLY IMPROVED ISOMALT
ISOMALT SOLIDE À FONCTIONNALITÉ AMÉLIORÉE

(30) Priorität: 07.02.2018 DE 102018201916
(43) Veröffentlichungstag der Anmeldung: 16.12.2020
(73) Patentinhaber: Südzucker AG, 68165 Mannheim (DE)
(72) Erfinder: BERNARD, Jörg, 67283 Albsheim (DE)
(74) Vertreter: Schrell, Andreas
(86) Internationale Anmeldenummer: PCT/EP2019/052722
(87) Internationale Veröffentlichungsnummer: WO 2019/154786

(56) Entgegenhaltungen:
- EP-A1- 0 625 578
- EP-B2- 0 859 006
- WO-A1-97/08958
- DE-A1- 2 520 173

## Beschreibung

Die vorliegende Erfindung betrifft eine feste Isomalt-Zusammensetzung umfassend 6-O-alpha-D-glucopyranosyl-D-sorbitol (1,6-GPS) und 1-O-alpha-D-glucopyranosyl-D-mannitol (1,1-GPM) und die weiteren glycosylierten Isomalt-Komponenten 1-O-(6`-O-alpha-D-glucopyranosyl)-alpha-D-glucopyranosyl-D-mannitol (6`-g-1,1-GPM), 6-O-(6`-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) und 1,6-di-O-alpha-D-glucopyranosyl-D-mannitol (6-g-1,1-GPM, wobei das Gewichtsverhältnis von 6'-g-1,1-GPM : 6'-g-1,6-GPS : 1-g-1,6-GPS : 6-g-1,1-GPM in der Isomalt-Zusammensetzung 1:(0,7-1,3):(0,3-1,1):(1-2) beträgt (jeweils bezogen auf Gew.-% und Trockensubstanz (TS) der glycosylierten Isomalt-Komponenten).

Isomalt (hydrierte Isomaltulose) ist ein Zuckeraustauschstoff, der als Hauptbestandteile 1,6-GPS und 1,1-GPM aufweist, und der aufgrund seiner Akariogenität, seines geringen Brennwerts und seiner Diabetikereignung vorteilhaft ist.

DE 25 20 173 A1 betrifft ein Verfahren zur Herstellung von 1,6-GPS und 1,1-GPM aus Isomaltulose und dessen Verwendung als Zuckeraustauschstoff. Die EP 0 625 578 A1 offenbart die Herstellung von Isomalt und deren Verwendung als Süßungsmittel in verschiedenen Genuss- und Lebensmittelprodukten.

EP 0 859 006 B2 und WO 1997/008958 A1 betreffen Verfahren zur Herstellung von 1,6-GPS-angereicherten und 1,1-GPM angereicherten Gemischen, sowie 1,6-GPS und 1,1-GPM in reiner Form, und Verwendungen davon.

Derartige Isomalt-Zusammensetzungen werden in vielen Produkten, beispielsweise im Genuss- und Lebensmittelbereich, eingesetzt. Das breite Anwendungsspektrum von Isomalt-Zusammensetzungen erfordert je nach Endprodukt, den damit verbundenen Konsumentenwünschen und technologischen Anforderungen eine besondere Flexibilität hinsichtlich der Bereitstellung unterschiedlicher Produkteigenschaften. So setzen bestimmte Endprodukte und/oder Konsumentenwünsche trockene Isomalt-Zusammensetzungen voraus, die eine besonders gute Fließfähigkeit und/oder Rieselfähigkeit aufweisen, insbesondere nach Lagerung der Isomalt-Zusammensetzungen. Die bisher bekannten Isomalt-Zusammensetzungen sind in ihrer Fließfähigkeit und Rieselfähigkeit, insbesondere nach Lagerung der Isomalt-Zusammensetzungen, verbesserungsfähig.

Der Erfindung liegt daher das technische Problem zugrunde, eine feste Isomalt-Zusammensetzung umfassend 1,1-GPM und 1,6-GPS, sowie diese Zuckeralkohole in größerer Menge enthaltende Gemische bereitzustellen, die eine verbesserte Riesel- und/oder Fließfähigkeit aufzeigt.

Die vorliegende Erfindung löst das technische Problem durch die Bereitstellung einer festen Isomalt-Zusammensetzung, wobei die feste Isomalt-Zusammensetzung 1,1-GPM, 1,6-GPS und die glycosylierten Isomalt-Komponenten 6'-g-1,1-GPM, 6'-g-1,6-GPS, 1-g-1,6-GPS und 6-g-1,1-GPM aufweist und wobei das Gewichtsverhältnis von 6'-g-1,1-GPM : 6'-g-1,6-GPS : 1-g-1,6-GPS : 6-g-1,1-GPM in der Isomalt-Zusammensetzung 1:(0,7-1,3):(0,3-1,1):(1-2) beträgt, bezogen auf Gew.-% und Trockensubstanz (TS) der glycosylierten Isomalt-Komponenten.

Die Erfindung beruht auf der überraschenden Feststellung, dass eine feste Isomalt-Zusammensetzung, die die glycosylierten Isomalt-Komponenten 6'-g-1,1-GPM (1-O-(6`-O-alpha-D-glucopyranosyl)-alpha-D-glucopyranosyl-D-mannitol), 6'-g-1,6-GPS (6-0-(6 '-O-alpha-D-glucopyranosyl)-alpha-D-glucopyranosyl-D-sorbitol), 1-g-1,6-GPS (1,6-di-O-alpha-D-glucopyranosyl-D-sorbitol) und 6-g-1,1-GPM (1,6-di-O-alpha-D-glucopyranosyl-D-mannitol) in dem erfindungsgemäßen spezifischen Gewichtsverhältnis aufweist, eine verbesserte Rieselfähigkeit und/oder Fließfähigkeit, insbesondere verringerte Verbackungsneigung, zeigt. Die vier Komponenten 6'-g-1,1-GPM, 6'-g-1,6-GPS, 1-g-1,6-GPS und 6-g-1,1-GPM werden im Folgenden auch als "die glycosylierten Komponenten" bezeichnet.

Die erfindungsgemäße verbesserte Fließfähigkeit und/oder die verbesserte Rieselfähigkeit der Isomalt-Zusammensetzung bleibt überraschenderweise über einen langen Zeitraum erhalten, insbesondere bei der Lagerung der festen Isomalt-Zusammensetzung, insbesondere wird keine oder kaum eine Beeinträchtigung der verbesserten Fließfähigkeit und/oder Rieselfähigkeit beobachtet.

Die verbesserte Fließfähigkeit und/oder die verbesserte Rieselfähigkeit ermöglicht in vorteilhafter Weise eine gleichmäßigere Schüttung und Portionierung der erfindungsgemäßen Isomalt-Zusammensetzung. Die erfindungsgemäße Isomalt-Zusammensetzung verklumpt weniger und neigt weniger dazu, Wasser aus der Umgebung aufzunehmen, insbesondere an die Oberfläche der Partikel der festen Isomalt-Zusammensetzung zu binden.

Im Zusammenhang mit der vorliegenden Erfindung versteht man unter der "Fließfähigkeit" die Eigenschaft eines Pulvers oder von gekörnten Materialien in Abhängigkeit von der inneren Reibung Halden zu formen, deren Oberflächen einen Winkel zu einer Grundfläche bildet, auf der sie platziert werden. Die Fließfähigkeit wird bevorzugt durch das Ausbreitmaß gemäß European Pharmacopeia 8.0, Volume I, Absatz 2.9.36 (Veröffentlicht am 15. Juli 2013) bestimmt. Untersucht wird hierbei der Böschungswinkel einer Schüttung der entsprechenden Probe. Dabei wird die Probe (Probenvolumen je Messung ca. 150 mL) durch eine Trichteröffnung von 10 mm auf eine Grundplatten fließen gelassen, wobei sich eine Schüttkegel ausbildet. Eine Flanke des Kegels wird dann mit einem Laserstrahl abgetastet und der Böschungswinkel ermittelt. Aus dem Böschungswinkel ergibt sich die Fließfähigkeit der Probe gemäß der in der European Pharmacopeia dargestellten Klassifizierung.

Im Zusammenhang mit der vorliegenden Erfindung wird unter dem Begriff "Rieselfähigkeit" das Ausmaß der freien Beweglichkeit von Pulvern oder Agglomeraten bezeichnet. Die Bestimmung der Rieselfähigkeit erfolgt beispielsweise mit Messtrichtern oder Rieselfähigkeitsprüfgeräten, wobei die Rieselzeit bei vorgegebener Masse oder vorgegebenen Volumen gemessen wird.

Im Zusammenhang mit der vorliegenden Erfindung wird unter dem Begriff "Verbackungsneigung" eine über die Lagerzeit eintretende zumindest teilweise oder vollständige Verfestigung eines ursprünglich pulverförmigen Materials verstanden. Die Verfestigung kann optisch durch Klumpenbildung wahrgenommen werden. Bevorzugt wird die Verbackungsneigung durch Anlegen eines äußeren Drucks bei konstanter Temperatur und rel. Luftfeuchte untersucht. Eine Klassifizierung der Verbackung erfolgt dabei wie in Beispiel 5 beschrieben. Dafür werden die Proben jeweils zweifach in ein zylindrisches Gefäße (Füllhöhe 2/3 der Gesamthöhe) gefüllt. Die Proben werden jeweils mit Folienscheiben abgedeckt und mit einem Stempel von 1,2 kg Masse beschwert. Zwischen Probengefäß und Stempel befindet sich ein Spalt von etwa 1 mm, damit Luftaustausch mit der Umgebung stattfinden kann. Die befüllten Probengefäße werden bei 25 °C und 65 % relativer Feuchte für die entsprechenden Zeiträume eingelagert (2, 4, 8, 12, 24 Wochen). Nach der Lagerung werden die Stempel und die Folie vorsichtig entfernt, ohne dabei die Produktoberfläche zu beschädigen. Die Proben werden aus den Probenbehältern entleert, wobei bewertet wird, ob das Produkt vollständig aus den Behältern herausrieselt und ob in der entstandenen Schüttung Klumpen enthalten sind. Eine Klassifizierung erfolgte dabei folgendermaßen:

| | |
|---|---|
| 1 | keine Klumpen vorhanden |
| 2 | Klumpen < 0,5 cm |
| 3 | Klumpen > 0,5 cm |
| 4 | Produkt durchgehend verbacken |

Im Zusammenhang mit der vorliegenden Erfindung wird unter einer erfindungsgemäßen Isomalt-Zusammensetzung ein Gemisch verstanden, welches 1,1-GPM (1-O-alpha-D-glucopyranosyl-D-mannitol), 1,6-GPS (6-O-alpha-D-glucopyranosyl-D-sorbitol) und die glycosylierten Isomalt-Komponenten 6'-g-1,1-GPM, 6'-g-1,6-GPS, 1-g-1,6-GPS und 6-g-1,1-GPM aufweist, wobei das Gewichtsverhältnis von 6'-g-1,1-GPM : 6'-g-1,6-GPS : 1-g-1,6-GPS : 6-g-1,1-GPM in der Isomalt-Zusammensetzung 1:(0,7-1,3):(0,3-1,1):(1-2) beträgt (jeweils bezogen auf Gew.-% und Trockensubstanz (TS) der glycosylierten Isomalt-Komponenten). In einer bevorzugten Ausführungsform kann die Isomalt-Zusammensetzung zudem weitere Komponenten wie 1,1-GPS (1-O-alpha-D-glucopyranosyl-D-sorbitol), Desoxy-Disaccharidalkohole, Glucosylglycitole, Mannit, Sorbit und/oder weitere in geringen Mengen auftretende Komponenten aufweisen.

Die erfindungsgemäße feste Isomalt-Zusammensetzung weist ein Gewichtsverhältnis von 6'-g-1,1-GPM : 6'-g-1,6-GPS : 1-g-1,6-GPS : 6-g-1,1-GPM von 1 : (0,7-1,3) : (0,3-1,1) : (1,0-2,0) auf, bevorzugt von 1: (0,7-1,2) : (0,5-1,0) : (1,1-1,9), bevorzugt von 1 : (0,7-1,0) : (0,6-1,0) : (1,3-1,9), bevorzugt von 1 : (0,8-1,0) : (0,7-1,0) : (1,2-1,8), bevorzugt von 1 : (0,8-1,0) : (0,8-1,0) : (1,4-1,8), bevorzugt von 1 : (0,9-1,1) : (0,9-1,1) : (1,4-1,8), bevorzugt von 1 : (0,9-1,1) : (1,1-1,4) : (1,8-2,2), oder bevorzugt von 1 : (0,9-1,1) : (0,2-0,5) : (1-1,2), jeweils bezogen auf Gew.-% und Trockensubstanz (TS) der glycosylierten Isomalt-Komponenten.

Im Zusammenhang mit der vorliegenden Erfindung addieren, soweit nicht anders angegeben und/oder erkenntlich, die für eine Zusammensetzung von Komponenten angegebenen prozentualen Anteile einzelner Komponenten auf 100 Gew.-%, das heißt, die Gesamtzusammensetzung auf.

In einer besonders bevorzugten Ausführungsform weist die erfindungsgemäße feste Isomalt-Zusammensetzung neben den glycosylierten Isomalt-Komponenten 1,6-GPS und 1,1-GPM auf, insbesondere ein Gemisch von 1,6-GPS und 1,1-GPM in einem Verhältnis von 43 bis 57 Gew.-% 1,6-GPS und 57 bis 43 Gew.-% 1,1-GPM (jeweils bezogen auf Trockensubstanz (TS) der Gesamtmenge an 1,6-GPS und 1,1-GPM). In einer weiteren bevorzugten Ausführungsform weist die erfindungsgemäße feste Isomalt-Zusammensetzung ein Gemisch aus 1,6-GPS und 1,1-GPM in einer 1,1-GPM-angereicherten Form auf, insbesondere einer solchen, in der mehr als 57, bevorzugt 57,1, oder bevorzugt 57,2 bis 99 Gew.-% 1,1-GPM und weniger als 43, bevorzugt 42,9, oder bevorzugt 42,8 bis 1 Gew.-% 1,6-GPS vorliegen (jeweils bezogen auf Trockensubstanz (TS) der Gesamtmenge an 1,6-GPS und 1,1-GPM). In einer weiteren bevorzugten Ausführungsform weist die erfindungsgemäße feste Isomalt-Zusammensetzung ein Gemisch aus 1,6-GPS und 1,1-GPM in einer 1,6-GPS-angereicherten Form auf, insbesondere einer solchen, in der mehr als 57, bevorzugt 57,1, oder bevorzugt 57,2 bis 99 Gew.-% 1,6-GPS und weniger als 43, bevorzugt 42,9, oder bevorzugt 42,8 bis 1 Gew.-% 1,1-GPM vorliegen, insbesondere weist das Gemisch 75 bis 80 Gew.-% 1,6-GPS und 25 bis 20 Gew.-% 1,1-GPM (jeweils bezogen auf Trockensubstanz (TS) der Gesamtmenge an 1,6-GPS und 1,1-GPM).

In einer bevorzugten Ausführungsform enthält die erfindungsgemäße feste Isomalt-Zusammensetzung mindestens 70 Gew.-% 1,6-GPS und 1,1-GPM, bevorzugt mindestens 80 Gew.-%, bevorzugt mindestens 82 Gew.-%, bevorzugt mindestens 84 Gew.-%, bevorzugt mindestens 86 Gew.-%, bevorzugt mindestens 88 Gew.-%, bevorzugt mindestens 90 Gew.-%, bevorzugt mindestens 92 Gew.-%, bevorzugt mindestens 94 Gew.-%, bevorzugt mindestens 96 Gew.-%, oder bevorzugt mindestens 98 Gew.-%, jeweils basierend auf dem Gesamtgewicht (TS) der Isomalt-Zusammensetzung, wobei in besonders bevorzugter Ausführungsform dieses Gemisch 1,6-GPS und 1,1-GPM in den vorstehend offenbarten Mengenverhältnissen zueinander aufweist.

In einer bevorzugten Ausführungsform weist die erfindungsgemäße feste Isomalt-Zusammensetzung mindestens 30 Gew.-% 1,6-GPS auf, bevorzugt mindestens 35 Gew.-%, bevorzugt mindestens, 40 Gew.-%, bevorzugt mindestens 45 Gew.-%, bevorzugt mindestens 50 Gew.-%, bevorzugt mindestens 55 Gew.-%, bevorzugt mindestens 60 Gew.-%, bevorzugt mindestens 65 Gew.-%, bevorzugt mindestens 70 Gew.-%, bevorzugt mindestens 75 Gew.-%, bevorzugt höchstens 90 Gew.-%, bevorzugt höchstens 80 Gew.-%, bevorzugt höchstens 70 Gew.-%, bevorzugt höchstens 60 Gew.-%, bevorzugt 40 bis 90 Gew.-%, bevorzugt 50 bis 90 Gew.-%, bevorzugt 60 bis 90 Gew.-%, bevorzugt 30 bis 80 Gew.-%, bevorzugt 40 bis 80 Gew.-%, oder bevorzugt 50 bis 80 Gew.-%, jeweils basierend auf dem Gesamtgewicht (TS) der Isomalt-Zusammensetzung.

In einer bevorzugten Ausführungsform weist die erfindungsgemäße feste Isomalt-Zusammensetzung mindestens 15 Gew.-% 1,1-GPM auf, bevorzugt mindestens 20 Gew.-%, bevorzugt mindestens 25 Gew.-%, bevorzugt mindestens 30 Gew.-%, bevorzugt mindestens 35 Gew.-%, bevorzugt mindestens 40 Gew.-%, bevorzugt mindestens 45 Gew.-%, bevorzugt mindestens 50 Gew.-%, bevorzugt mindestens 55 Gew.-%, bevorzugt mindestens 60 Gew.-%, bevorzugt mindestens 65 Gew.-%, bevorzugt höchstens 60 Gew.-%, bevorzugt höchstens 50 Gew.-%, bevorzugt höchstens 55 Gew.-%, bevorzugt höchstens 45 Gew.-%, bevorzugt höchstens 40 Gew.-%, bevorzugt höchstens 35 Gew.-%, bevorzugt höchstens 30 Gew.-%, bevorzugt höchstens 25 Gew.-%, bevorzugt 10 bis 60 Gew.-%, bevorzugt 20 bis 60 Gew.-%, bevorzugt 20 bis 50 Gew.-%, bevorzugt 20 bis 40 Gew.-%, bevorzugt 10 bis 50 Gew.-%, bevorzugt 10 bis 40 Gew.-%, oder bevorzugt 10 bis 30 Gew.-%, jeweils basierend auf dem Gesamtgewicht (TS) der Isomalt-Zusammensetzung.

In einer bevorzugten Ausführungsform weist die erfindungsgemäße feste Isomalt-Zusammensetzung die Komponenten 1,6-GPS, 1,1-GPM, 6'-g-1,1-GPM, 6'-g-1,6-GPS, 1-g-1,6-GPS und 6-g-1,1-GPM und mindestens eine weitere Komponente ausgewählt aus der Gruppe bestehend aus 1,1-GPS, Desoxy-Disaccharidalkoholen, GPI (Glucopyranosyl-idit), Glycosylglycitolen, Mannit und Sorbit auf.

In einer besonders bevorzugten Ausführungsform weist die erfindungsgemäße feste Isomalt-Zusammensetzung als einzige Komponenten 1,6-GPS, 1,1-GPM, 6'-g-1,1-GPM, 6'-g-1,6-GPS, 1-g-1,6-GPS und 6-g-1,1-GPM auf.

In einer bevorzugten Ausführungsform weist die erfindungsgemäße feste Isomalt-Zusammensetzung 0,01 bis 1 Gew.-% 6'-g-1,1-GPM auf, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, basierend auf dem Gesamtgewicht (TS) der Isomalt-Zusammensetzung.

In einer bevorzugten Ausführungsform weist die erfindungsgemäße feste Isomalt-Zusammensetzung 0,01 bis 1 Gew.-% 6'-g-1,6-GPS auf, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, jeweils basierend auf dem Gesamtgewicht (TS) der Isomalt-Zusammensetzung.

In einer bevorzugten Ausführungsform weist die erfindungsgemäße feste Isomalt-Zusammensetzung 0,01 bis 1 Gew.-% 1-g-1,6-GPS, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, jeweils basierend auf dem Gesamtgewicht (TS) der Isomalt-Zusammensetzung.

In einer bevorzugten Ausführungsform weist die erfindungsgemäße feste Isomalt-Zusammensetzung 0,01 bis 2 Gew.-% 6-g-1,1-GPM auf, bevorzugt von 0,01 bis 1,8 Gew.-%, bevorzugt von 0,02 bis 1,6 Gew.-%, bevorzugt von 0,03 bis 1,4 Gew.-%, bevorzugt 0,01 bis 1,6 Gew.-%, bevorzugt 0,01 bis 1,4 Gew.-%, bevorzugt 0,01 bis 1,2 Gew.-%, bevorzugt 0,01 bis 1 Gew.-%, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, jeweils basierend auf dem Gesamtgewicht (TS) der Isomalt-Zusammensetzung.

In einer bevorzugten Ausführungsform weist die erfindungsgemäße feste Isomalt-Zusammensetzung 97,5 bis 99,5 Gew.-% 1,6-GPS und 1,1-GPM und 0,06 bis 0,9 Gew.-% der glycosylierten Isomalt-Komponenten 6'-g-1,1-GPM, 6'-g-1,6-GPS, 1-g-1,6-GPS und 6-g-1,1-GPM auf, bevorzugt 97,7 bis 99,3 Gew.-% 1,6-GPS und 1,1-GPM und 0,08 bis 0,8 Gew.-% der glycosylierten Isomalt-Komponenten, oder bevorzugt 97,9 bis 99,1 Gew.-% 1,6-GPS und 1,1-GPM und 0,1 bis 0,7 Gew.-% der glycosylierten Isomalt-Komponenten, jeweils basierend auf dem Gesamtgewicht (TS) der Isomalt-Zusammensetzung.

In einer bevorzugten Ausführungsform weist die erfindungsgemäße feste Isomalt-Zusammensetzung 97,5 bis 99,5 Gew.-% 1,6-GPS und 1,1-GPM, 0,01 bis 0,2 Gew.-% 6'-g-1,1-GPM, 0,01 bis 0,2 Gew.-% 6'-g-1,6-GPS, 0,01 bis 0,2 Gew.-% 1-g-1,6-GPS und 0,01 bis 0,4 Gew.-% 6-g-1,1-GPM auf, bevorzugt 97,7 bis 99,3 Gew.-% 1,6-GPS und 1,1-GPM, 0,02 bis 0,18 Gew.-% 6'-g-1,1-GPM, 0,02 bis 0,18 Gew.-% 6'-g-1,6-GPS, 0,02 bis 0,18 Gew.-% 1-g-1,6-GPS und 0,02 bis 0,34 Gew.-% 6-g-1,1-GPM, oder bevorzugt 97,9 bis 99,1 Gew.-% 1,6-GPS und 1,1-GPM, 0,03 bis 1,6 Gew.-% 6'-g-1,1-GPM, 0,03 bis 1,6 Gew.-% 6'-g-1,6-GPS, 0,03 bis 1,6 Gew.-% 1-g-1,6-GPS und 0,04 bis 0,28 Gew.-% 6-g-1,1-GPM, jeweils basierend auf dem Gesamtgewicht (TS) der Isomalt-Zusammensetzung.

In einer bevorzugten Ausführungsform weist die erfindungsgemäße feste Isomalt-Zusammensetzung 40 bis 89 Gew.-% Gew.-% 1,6-GPS, 10 bis 59 Gew.-% 1,1-GPM und 0,06 bis 0,9 Gew.-% der glycosylierten Isomalt-Komponenten 6'-g-1,1-GPM, 6'-g-1,6-GPS, 1-g-1,6-GPS und 6-g-1,1-GPM auf, bevorzugt 40 bis 79 Gew.-% Gew.-% 1,6-GPS, 20 bis 59 Gew.-% 1,1-GPM und 0,08 bis 0,8 Gew.-% der glycosylierten Isomalt-Komponenten, oder bevorzugt 50 bis 79 Gew.-% Gew.-% 1,6-GPS, 20 bis 49 Gew.-% 1,1-GPM und 0,1 bis 0,7 Gew.-% der glycosylierten Isomalt-Komponenten, jeweils basierend auf dem Gesamtgewicht (TS) der Isomalt-Zusammensetzung.

In einer bevorzugten Ausführungsform weist die erfindungsgemäße feste Isomalt-Zusammensetzung 1,6-GPS, 1,1-GPM, 6'-g-1,1-GPM, 6'-g-1,6-GPS, 1-g-1,6-GPS, 6-g-1,1-GPM und 1,1-GPS (1-O-alpha-D-glucopyranosyl-D-sorbitol) auf.

In einer bevorzugten Ausführungsform weist die erfindungsgemäße feste Isomalt-Zusammensetzung 0,1 bis 10 Gew.-% 1,1-GPS auf, bevorzugt 0,1 bis 8 Gew.-%, bevorzugt 0,1 bis 6 Gew.-%, bevorzugt 0,1 bis 5 Gew.-%, bevorzugt 0,1 bis 4 Gew.-%, bevorzugt 0,1 bis 3 Gew.-%, bevorzugt 0,1 bis 2 Gew.-%, bevorzugt 0,1 bis 1 Gew.-%, bevorzugt 0,1 bis 0,8 Gew.-%, bevorzugt 0,1 bis 0,6 Gew.-%, bevorzugt 0,1 bis 0,4 Gew.-%, bevorzugt 0,2 bis 10 Gew.-%, bevorzugt 0,2 bis 8 Gew.-%, bevorzugt 0,2 bis 6 Gew.-%, bevorzugt 0,2 bis 5 Gew.-%, bevorzugt 0,2 bis 4 Gew.-%, bevorzugt 0,2 bis 3 Gew.-%, bevorzugt 0,2 bis 2 Gew.-%, bevorzugt 0,2 bis 1 Gew.-%, bevorzugt 0,2 bis 0,8 Gew.-%, bevorzugt 0,2 bis 0,6 Gew.-%, bevorzugt 0,2 bis 0,4 Gew.-%, 0,5 bis 10 Gew.-%, bevorzugt 0,5 bis 8 Gew.-%, bevorzugt 0,5 bis 6 Gew.-%, bevorzugt 0,5 bis 5 Gew.-%, bevorzugt 0,5 bis 4 Gew.-%, bevorzugt 0,5 bis 3 Gew.-%, bevorzugt 0,5 bis 2 Gew.-%, bevorzugt 0,5 bis 1 Gew.-%, bevorzugt 0,5 bis 0,8 Gew.-%, 1 bis 10 Gew.-%, bevorzugt 1 bis 8 Gew.-%, bevorzugt 1 bis 6 Gew.-%, bevorzugt 1 bis 5 Gew.-%, bevorzugt 1 bis 4 Gew.-%, bevorzugt 1 bis 3 Gew.-%, oder bevorzugt 1 bis 2 Gew.-%, jeweils basierend auf dem Gesamtgewicht (TS) der Isomalt-Zusammensetzung.

In einer besonders bevorzugten Ausführungsform enthält die erfindungsgemäße feste Isomalt-Zusammensetzung kein 1,1-GPS.

In einer bevorzugten Ausführungsform weist die erfindungsgemäße feste Isomalt-Zusammensetzung 1,6-GPS, 1,1-GPM, 6'-g-1,1-GPM, 6'-g-1,6-GPS, 1-g-1,6-GPS, 6-g-1,1-GPM und Desoxy-Disaccharidalkohole auf.

In einer bevorzugten Ausführungsform weist die erfindungsgemäße feste Isomalt-Zusammensetzung 0,01 bis 2 Gew.-% Desoxy-Disaccharidalkohole auf, bevorzugt 0,01 bis 1 Gew.-%, bevorzugt 0,01 bis 0,8 Gew.-%, bevorzugt 0,01 bis 0,6 Gew.-%, bevorzugt 0,01 bis 0,4 Gew.-%, bevorzugt 0,01 bis 0,2 Gew.-%, bevorzugt 0,01 bis 0,5 Gew.-%, bevorzugt 0,01 bis 0,1 Gew.-%, 0,03 bis 1,0 Gew.-%, bevorzugt 0,03 bis 0,8 Gew.-%, bevorzugt 0,03 bis 0,6 Gew.-%, bevorzugt 0,03 bis 0,4 Gew.-%, bevorzugt 0,03 bis 0,2 Gew.-%, bevorzugt 0,03 bis 0,5 Gew.-%, bevorzugt 0,03 bis 0,1 Gew.-%, bevorzugt 0,1 bis 1 Gew.-%, bevorzugt 0,1 bis 2 Gew.-%, bevorzugt 0,1 bis 4 Gew.-%, bevorzugt 0,1 bis 8 Gew.-%, bevorzugt 0,2 bis 2 Gew.-%, bevorzugt 0,4 bis 1 Gew.-%, oder bevorzugt 0,4 bis 2 Gew.-%, jeweils basierend auf dem Gesamtgewicht (TS) der Isomalt-Zusammensetzung.

In einer besonders bevorzugten Ausführungsform enthält die erfindungsgemäße feste Isomalt-Zusammensetzung keine Desoxy-Disaccharidalkohole.

In einer bevorzugten Ausführungsform weist die erfindungsgemäße feste Isomalt-Zusammensetzung 1,6-GPS, 1,1-GPM, 6'-g-1,1-GPM, 6'-g-1,6-GPS, 1-g-1,6-GPS, 6-g-1,1-GPM und Glycosylglycitole auf.

In einer bevorzugten Ausführungsform weist die erfindungsgemäße feste Isomalt-Zusammensetzung 0,01 bis 2 Gew.-% Glycosylglycitole auf, bevorzugt 0,01 bis 1 Gew.-%, bevorzugt 0,01 bis 0,8 Gew.-%, bevorzugt 0,01 bis 0,6 Gew.-%, bevorzugt 0,01 bis 0,5 Gew.-%, bevorzugt 0,01 bis 0,4 Gew.-%, bevorzugt 0,01 bis 0,2 Gew.-%, bevorzugt 0,01 bis 0,1 Gew.-%, 0,03 bis 1,0 Gew.-%, bevorzugt 0,03 bis 2,0 Gew.-%, bevorzugt 0,03 bis 0,8 Gew.-%, bevorzugt 0,03 bis 0,6 Gew.-%, bevorzugt 0,03 bis 0,5 Gew.-%, bevorzugt 0,03 bis 0,4 Gew.-%, bevorzugt 0,03 bis 0,2 Gew.-%, bevorzugt 0,03 bis 0,1 Gew.-%, 0,04 bis 1,0 Gew.-%, bevorzugt 0,04 bis 2,0 Gew.-%, bevorzugt 0,04 bis 0,8 Gew.-%, bevorzugt 0,04 bis 0,6 Gew.-%, bevorzugt 0,04 bis 0,5 Gew.-%, bevorzugt 0,04 bis 0,4 Gew.-%, bevorzugt 0,04 bis 0,2 Gew.-%, bevorzugt 0,04 bis 0,1 Gew.-%, bevorzugt 0,1 bis 0,4 Gew.-%, bevorzugt 0,1 bis 0,6 Gew.-%, bevorzugt 0,1 bis 0,8 Gew.-%, bevorzugt 0,1 bis 1 Gew.-%, bevorzugt 0,1 bis 2 Gew.-%, bevorzugt 0,1 bis 4 Gew.-%, bevorzugt 0,1 bis 8 Gew.-%, bevorzugt 0,2 bis 2 Gew.-%, bevorzugt 0,4 bis 2 Gew.-%, oder bevorzugt 0,4 bis 1 Gew.-%, jeweils basierend auf dem Gesamtgewicht (TS) der Isomalt-Zusammensetzung.

In einer besonders bevorzugten Ausführungsform enthält die erfindungsgemäße feste Isomalt-Zusammensetzung keine Glycosylglycitole.

In einer bevorzugten Ausführungsform weist die erfindungsgemäße feste Isomalt-Zusammensetzung 1,6-GPS, 1,1-GPM, 6'-g-1,1-GPM, 6'-g-1,6-GPS, 1-g-1,6-GPS, 6-g-1,1-GPM und Mannit auf.

In einer bevorzugten Ausführungsform weist die erfindungsgemäße feste Isomalt-Zusammensetzung 0,01 bis 0,3 Gew.-% Mannit auf, bevorzugt 0,01 bis 0,2 Gew.-%, bevorzugt 0,01 bis 0,16 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,01 bis 0,06 Gew.-%, bevorzugt 0,01 bis 0,04 Gew.-%, bevorzugt 0,02 bis 0,3 Gew.-%, bevorzugt 0,02 bis 0,2 Gew.-%, bevorzugt 0,02 bis 0,16 Gew.-%, bevorzugt 0,02 bis 0,1 Gew.-%, bevorzugt 0,02 bis 0,06 Gew.-%, bevorzugt 0,04 bis 0,16 Gew.-%, bevorzugt 0,04 bis 0,2 Gew.-%, bevorzugt 0,04 bis 0,1 Gew.-%, bevorzugt 0,04 bis 0,08 Gew.-%, bevorzugt 0,06 bis 0,2 Gew.-%, bevorzugt 0,06 bis 0,14 Gew.-%, bevorzugt 0,06 bis 0,1 Gew.-%, oder bevorzugt 0,06 bis 0,08 Gew.-%, jeweils basierend auf dem Gesamtgewicht (TS) der Isomalt-Zusammensetzung.

In einer besonders bevorzugten Ausführungsform enthält die erfindungsgemäße feste Isomalt-Zusammensetzung kein Mannit.

In einer bevorzugten Ausführungsform weist die erfindungsgemäße feste Isomalt-Zusammensetzung 1,6-GPS, 1,1-GPM, 6'-g-1,1-GPM, 6'-g-1,6-GPS, 1-g-1,6-GPS, 6-g-1,1-GPM und Sorbit auf.

In einer bevorzugten Ausführungsform weist die erfindungsgemäße feste Isomalt-Zusammensetzung 0,01 bis 0,4 Gew.-% Sorbit auf, bevorzugt 0,01 bis 0,3 Gew.-%, bevorzugt 0,01 bis 0,24 Gew.-%, bevorzugt 0,01 bis 0,2 Gew.-%, bevorzugt 0,01 bis 0,1 Gew.-%, bevorzugt 0,01 bis 0,06 Gew.-%, bevorzugt 0,02 bis 0,3 Gew.-%, bevorzugt 0,02 bis 0,2 Gew.-%, bevorzugt 0,02 bis 0,1 Gew.-%, bevorzugt 0,02 bis 0,06 Gew.-%, bevorzugt 0,04 bis 0,3 Gew.-%, bevorzugt 0,04 bis 0,24 Gew.-%, bevorzugt 0,04 bis 0,2 Gew.-%, bevorzugt 0,04 bis 0,1 Gew.-%, bevorzugt 0,04 bis 0,08 Gew.-%, bevorzugt 0,06 bis 0,24 Gew.-%, bevorzugt 0,06 bis 0,2 Gew.-%, bevorzugt 0,06 bis 0,14 Gew.-%, bevorzugt 0,06 bis 0,1 Gew.-%, oder bevorzugt 0,06 bis 0,08 Gew.-%, jeweils basierend auf dem Gesamtgewicht (TS) der Isomalt-Zusammensetzung.

In einer besonders bevorzugten Ausführungsform enthält die erfindungsgemäße feste Isomalt-Zusammensetzung kein Sorbit.

In einer bevorzugten Ausführungsform weist die erfindungsgemäße feste Isomalt-Zusammensetzung 1,6-GPS, 1,1-GPM, 6'-g-1,1-GPM, 6'-g-1,6-GPS, 1-g-1,6-GPS, 6-g-1,1-GPM und GPI auf.

In einer bevorzugten Ausführungsform weist die erfindungsgemäße feste Isomalt-Zusammensetzung 0,01 bis 0,2 Gew.-% GPI auf, bevorzugt 0,01 bis 0,16 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,01 bis 0,06 Gew.-%, bevorzugt 0,01 bis 0,04 Gew.-%, bevorzugt 0,02 bis 0,3 Gew.-%, bevorzugt 0,02 bis 0,2 Gew.-%, bevorzugt 0,02 bis 0,16 Gew.-%, bevorzugt 0,02 bis 0,1 Gew.-%, bevorzugt 0,02 bis 0,06 Gew.-%, bevorzugt 0,04 bis 0,16 Gew.-%, bevorzugt 0,04 bis 0,2 Gew.-%, bevorzugt 0,04 bis 0,1 Gew.-%, bevorzugt 0,04 bis 0,08 Gew.-%, bevorzugt 0,06 bis 0,2 Gew.-%, bevorzugt 0,06 bis 0,14 Gew.-%, oder bevorzugt 0,06 bis 0,1 Gew.-%, jeweils basierend auf dem Gesamtgewicht (TS) der Isomalt-Zusammensetzung.

In einer besonders bevorzugten Ausführungsform enthält die erfindungsgemäße feste Isomalt-Zusammensetzung kein GPI.

In einer bevorzugten Ausführungsform enthält die erfindungsgemäße feste Isomalt-Zusammensetzung maximal 10 Gew.-% Wasser, bevorzugt maximal 8 Gew.-%, bevorzugt maximal 6 Gew.-%, bevorzugt maximal 4 Gew.-%, bevorzugt maximal 2 Gew.-%, bevorzugt 2 bis 10 Gew.-%, bevorzugt 2 bis 8 Gew.-%, bevorzugt 2 bis 6 Gew.-%, bevorzugt 2 bis 4 Gew.-%, bevorzugt 1 bis 8 Gew.-%, bevorzugt 1 bis 6 Gew.-%, bevorzugt 1 bis 4 Gew.-%, oder bevorzugt 1 bis 2 Gew.-%, jeweils basierend auf dem Gesamtgewicht der Isomalt-Zusammensetzung. In einer besonders bevorzugten Ausführungsform ist die erfindungsgemäße feste Isomalt-Zusammensetzung wasserfrei.

In einer bevorzugten Ausführungsform liegt die erfindungsgemäße feste Isomalt-Zusammensetzung in kristalliner Form vor. In einer weiteren bevorzugten Ausführungsform liegt die erfindungsgemäße feste Isomalt-Zusammensetzung in semikristalliner oder amorpher Form vor.

In bevorzugter Ausführungsform liegt die feste Isomalt-Zusammensetzung in partikulärer Form vor. In einer bevorzugten Ausführungsform weist die erfindungsgemäße feste Isomalt-Zusammensetzung eine Partikelgrößenverteilung auf, gemäß der mindestens 90% der Partikel eine Größe von höchstens 1000 µm aufweisen, bevorzugt höchstens 800 µm, bevorzugt höchstens 600 µm, bevorzugt höchstens 500 µm, bevorzugt höchstens 400 µm, bevorzugt höchstens 300 µm, bevorzugt höchstens 200 µm, bevorzugt höchstens 100 µm, bevorzugt höchstens 80 µm, oder bevorzugt höchstens 60 µm. In bevorzugter Ausführungsform weist die erfindungsgemäße feste Isomalt-Zusammensetzung eine Partikelgrößenverteilung auf, gemäß der mindestens 90% der Partikel eine Partikelgröße von 100 bis 1000 µm aufweisen, bevorzugt 100 bis 800 µm, bevorzugt 100 bis 500 µm, bevorzugt 200 bis 800 µm, bevorzugt 300 bis 600 µm, bevorzugt 10 bis 90 µm, bevorzugt 20 bis 80 µm, bevorzugt 30 bis 80 µm, bevorzugt 40 bis 80 µm, bevorzugt 50 bis 80 µm, bevorzugt 50 bis 100 µm, bevorzugt 50 bis 200 µm, bevorzugt 10 bis 50 µm, bevorzugt 10 bis 60 µm, bevorzugt 20 bis 50 µm, bevorzugt 20 bis 60 µm, bevorzugt 1 bis 200 µm, oder bevorzugt 1 bis 100 µm.

In einer besonders bevorzugten Ausführungsform weist die erfindungsgemäße feste Isomalt-Zusammensetzung eine Partikelgrößenverteilung auf, gemäß der mindestens 90%, insbesondere 90 %, der Partikel eine Partikelgröße von höchstens 100 µm aufweisen, insbesondere < 100 µm. In einer besonders bevorzugten Ausführungsform weist die erfindungsgemäße feste Isomalt-Zusammensetzung eine Partikelgrößenverteilung auf, gemäß der mindestens 90%, insbesondere 90 %, der Partikel eine Partikelgröße von 200 bis 710 µm aufweisen. In einer weiteren besonders bevorzugten Ausführungsform weist die erfindungsgemäße feste Isomalt-Zusammensetzung eine Partikelgrößenverteilung auf, gemäß der mindestens 90%, insbesondere 90 %, der Partikel eine Größe von 500 bis 3500 µm aufweisen.

In einer bevorzugten Ausführungsform weist die erfindungsgemäße feste Isomalt-Zusammensetzung mindestens einen Süßkraftverstärker auf.

Im Zusammenhang mit der vorliegenden Erfindung wird unter einem Süßkraftverstärker eine Substanz verstanden, die im Unterschied zu Intensivsüßstoffen selbst keinen oder kaum süßen Geschmack, das heißt keine oder nur sehr geringe Eigensüße, aufweist, jedoch die Süße einer anderen süßen Substanz verstärken kann.

Die vorliegende Erfindung stellt auch die Verwendung der erfindungsgemäßen Isomalt-Zusammensetzung in Produkten für den menschlichen und/oder tierischen Verzehr bereit, bevorzugt ist das Produkt für den menschlichen und/oder tierischen Verzehr ein Nahrungs- oder Genussmittel oder ein pharmazeutisches Produkt.

In einer bevorzugten Ausführungsform ist das Nahrungs- oder Genussmittel eine Süßware, eine Füllung für Süßwaren, eine Weichkaramelle, eine Hartkaramelle, ein Fondant, ein Joghurt, ein Gebäck, ein Kaugummi, eine Eiscreme, Milch, ein Milchprodukt, ein Getränk, ein Fruchtsaft, ein Fruchtsaftkonzentrat, eine Fruchtzubereitung, eine Marmelade, ein Gelee oder ein Smoothie.

In einer bevorzugten Ausführungsform weist das Nahrungs- oder Genussmittel mindestens 1, 2, 3, 4, 5, 6, 7, 8, 9, 10, 20, 30, 40, 50, 60, 70, 80, 90, 95, 98, insbesondere 99 Gew.-% der erfindungsgemäßen festen Isomalt-Zusammensetzung auf, basierend auf dem Gesamtgewicht (TS) des Nahrungs- oder Genussmittels.

Die erfindungsgemäßen festen Isomalt-Zusammensetzungen lassen sich beispielsweise herstellen, indem insbesondere die glycosylierten Isomalt-Komponenten jeweils einzeln mittels chromatographischer Verfahren aus herkömmlichen, an sich bekannten Isomalt-Zusammensetzungen isoliert werden, so wie beispielsweise in der EP 0 625 578 A1 beschrieben. Dieses Dokument ist hinsichtlich der Beschreibung der Herstellung einer dort als Süßungsmittel bezeichneten Isomalt-Zusammensetzung und deren Zusammensetzung vollinhaltlich in die Offenbarung der vorliegenden Erfindung mit einbezogen.

In bevorzugter Ausführungsform können die isolierten, separat vorliegenden glycosylierten Isomalt-Komponenten (6'-g-1,1-GPM, 6'-g-1,6-GPS, 1-g-1,6-GPS und 6-g-1,1-GPM) zur Herstellung der erfindungsgemäßen festen Isomalt-Zusammensetzungen in den erfindungsgemäß vorgesehenen Gewichtsverhältnissen und Mengen ihrer Einzelkomponenten miteinander und mit weiteren Komponenten, insbesondere 1,1-GPM, 1,6-GPS und gegebenenfalls 1,1-GPS, gemischt werden.

Weitere vorteilhafte Ausgestaltungen der Erfindung ergeben sich aus den Unteransprüchen.

Die Erfindung wird anhand von Ausführungsbeispielen näher erläutert.

### Beispiel 1

### Herstellung erfindungsgemäßer kristalliner Isomalt-Zusammensetzungen (ungesiebt)

Es wurden sowohl erfindungsgemäße Isomalt-Zusammensetzungen als auch Vergleichs-Isomalt-Zusammensetzungen hergestellt, die einerseits 1,6-GPS und 1,1-GPM in einem äquimolaren Verhältnis von 43 bis 57 Gew.-% 1,6-GPS zu 57 bis 43 Gew.-% 1,1-GPM aufweisen und im Folgenden als Isomalt-ST-basierte Zusammensetzungen (Isomalt-ST-Basis) bezeichnet werden (siehe Tabelle 1). Darüber hinaus wurden erfindungsgemäße Isomalt-Zusammensetzungen und Vergleichs-Isomalt-Zusammensetzungen hergestellt, die 1,6-GPS und 1,1-GPM in einem Verhältnis von 70 bis 80 Gew.-% 1,6-GPS zu 30 bis 20 Gew.-% 1,1-GPM aufweisen und als Isomalt-GS-basierte Zusammensetzungen (Isomalt-GS-Basis) bezeichnet werden (siehe Tabelle 1).

Für die Herstellung der genannten Isomalt-basierten Zusammensetzungen wurde gemäß Beispiel 1 der EP 0 625 578 A1 eine dort als hydrierte isomerisierte Saccharose bezeichnete Isomalt-Zusammensetzung (Süßungsmittel) hergestellt und einer chromatographischen Auftrennung der in dieser Zusammensetzung enthaltenen Komponenten 1,1-GPM, 1,6-GPS, 1,1-GPS, 6'-g-1,1-GPM, 6'-g-1,6-GPS, 1-g-1,6-GPS, 6-g-1,1-GPM, Desoxy-Disaccharidalkoholfraktion und Glycosylglycitolfraktion unterzogen. Die nach der Auftrennung gewonnenen, in isolierter Form erhaltenen einzelnen Komponenten wurden mit kommerziell erhältlichem Mannit und Sorbit in den aus der nachstehenden Tabelle 1 ersichtlichen Mengen und Mengenverhältnissen miteinander gemischt und so im Wesentlichen kristalline Gemische erhalten.

Die Zusammensetzung der erhaltenen erfindungsgemäßen kristallinen Isomalt-Zusammensetzungen (Proben 17 bis 32) und von Vergleichs-Isomalt-Zusammensetzungen (Proben 1 bis 16), jeweils ungesiebt, sind unter Angabe der Mengen an 6'-g-1,1-GPM, 6'-g-1,6-GPS, 1-g-1,6-GPS, 6-g-1,1-GPM, 1,1-GPM, 1,6-GPS, 1,1-GPS, Mannit, Sorbit, Desoxy-Disaccharidalkoholen und Glycosylglycitolen in Tabelle 1 aufgeführt.

Probe 3 (Vergleichs-Isomalt-Zusammensetzung) lässt sich auch durch Anwendung der in Beispiel 1 der EP 0 625 578 A1 genannten Verfahrensbedingungen auf eine isomerisierte Saccharoselösung und anschließende chromatographische Aufreinigung erhalten.

Sowohl die Vergleichs-Isomalt-Zusammensetzungen als auch die erfindungsgemäßen Isomalt-Zusammensetzungen weisen identische Komponenten auf, und sind insbesondere durch Anwesenheit der vier glycosylierten Komponenten ausgezeichnet. Die erfindungsgemäßen Isomalt-Zusammensetzungen zeichnen sich gegenüber den Vergleichs-Isomalt-Zusammensetzungen insbesondere durch andere Mengenverhältnisse der vier glycosylierten Komponenten zueinander aus.

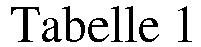

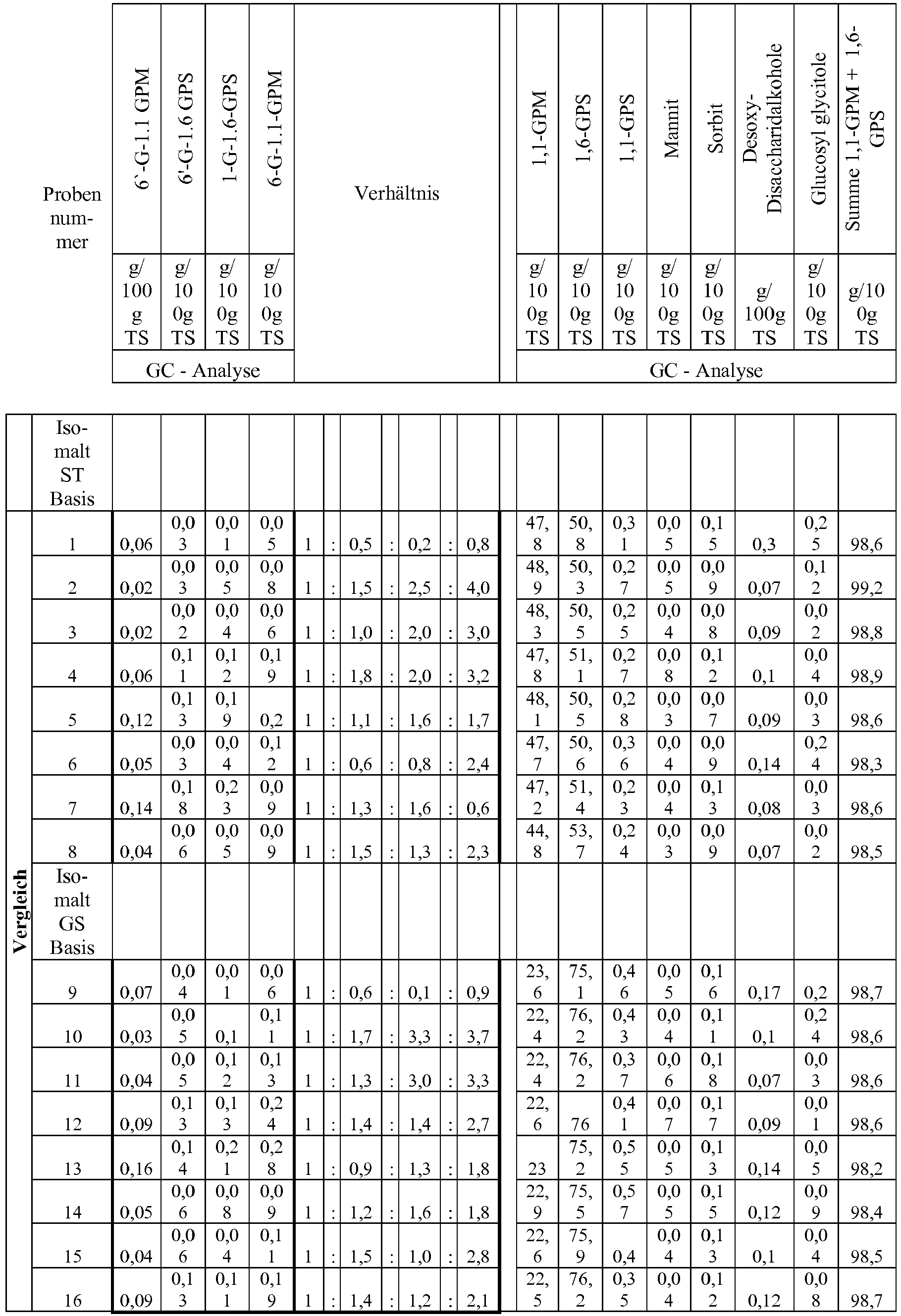

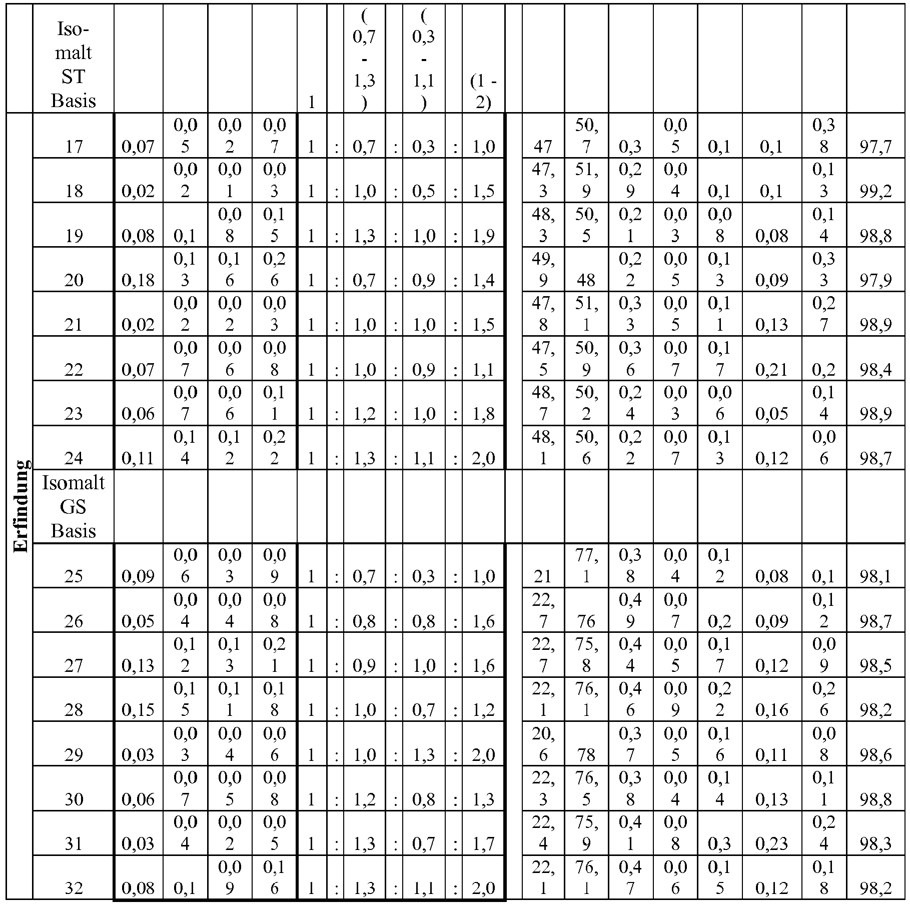

### Beispiel 2

### Herstellung von erfindungsgemäßen kristallinen Produkten mit definierter Partikelgrößenverteilung

Aus den erfindungsgemäßen Isomalt-Zusammensetzungen (Proben 17 bis 32) und Vergleichs-Zusammensetzungen von Isomalt (Proben 1 bis 16) wurden Zusammensetzungen mit definierter Partikelgrößenverteilung gewonnen. Die kristallinen Produkte mit definierter Partikelgrößenverteilung (gesiebt) sind in Tabelle 2 dargestellt.

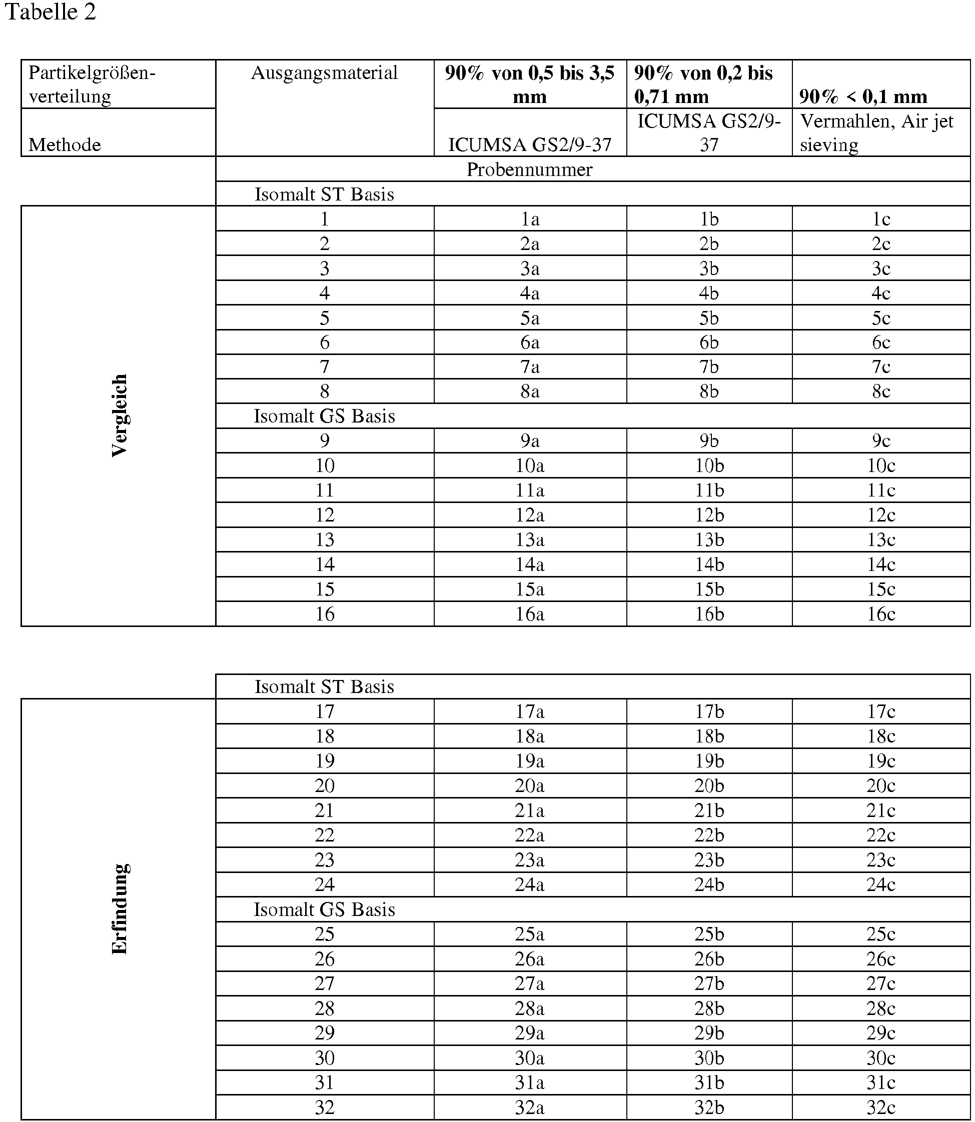

Im Folgenden (Beispiele 3 bis 5) werden die erfindungsgemäßen Isomalt-Zusammensetzungen und Vergleichs-Isomalt-Zusammensetzungen mit einer Partikelgröße von 0,5 bis 3,5 mm als Probenserie a, die erfindungsgemäßen Isomalt-Zusammensetzungen und Vergleichs-Isomalt-Zusammensetzungen mit einer Partikelgrößenverteilung von 90% von 0,2 bis 0,71 mm als Probenserie b und die erfindungsgemäßen Isomalt-Zusammensetzungen und Vergleichs-Isomalt-Zusammensetzungen mit einer Partikelgrößenverteilung von 90% < 0,1 mm als Probenserie c bezeichnet.

### Beispiel 3

### Untersuchung der Fließfähigkeit (Probenserie a und b)

Die Fließfähigkeit wurde entsprechend der European Pharmacopeia 8.0, Volume I, Absatz 2.9.36 (Powder flow, Pulverfluss) (Veröffentlicht am 15. Juli 2013) untersucht und wie folgt klassifiziert. Untersucht wurde hierbei mittels eines GTB Pulver- und Granulattesters der Fa. ERWEKA der Böschungswinkel einer Schüttung der entsprechenden Probe. Dabei wurde die Probe (Probenvolumen je Messung ca. 150 mL) durch eine Trichteröffnung von 10 mm auf die Grundplatten fließen gelassen, wobei sich eine Schüttkegel ausgebildet hat. Eine Flanke des Kegels wurde dann mit einem Laserstrahl abgetastet und der Böschungswinkel ermittelt. Aus dem Böschungswinkel ergab sich die Fließeigenschaft der Probe gemäß der in der European Pharmacopeia dargestellten Klassifizierung. Die Ergebnisse (Tabelle 3) sind jeweils aus drei Einzelmessungen gemittelt.

Die Fließfähigkeit der erfindungsgemäßen Isomalt-Zusammensetzungen (Proben 17 bis 32) war für alle Proben der Probenserien a und b gut, während die Fließfähigkeit ("Flow property") der Vergleichs-Zusammensetzungen von Isomalt (Proben 1 bis 16) überraschenderweise signifikant schlechter war. Überraschenderweise hat insbesondere das Mengenverhältnis der vier glycosylierten Komponenten zueinander einen signifikanten, die Fließfähigkeit von Isomalt-Zusammensetzungen fördernden Einfluss.

**Eine Klassifizierung erfolgte dabei folgendermaßen:**

| **Fließfähigkeit** | Böschungswinkel ° |
|---|---|
| exzellent | 25 ... 30 |
| gut | 31 ... 35 |
| befriedigend (keine Hilfe nötig) | 36 ... 40 |
| ausreichend (ggf. Stocken) | 41 ... 45 |
| mangelhaft (Schütteln nötig) | 46 ... 55 |
| sehr schlecht | 56 ... 65 |
| äußerst schlecht | > 66 |

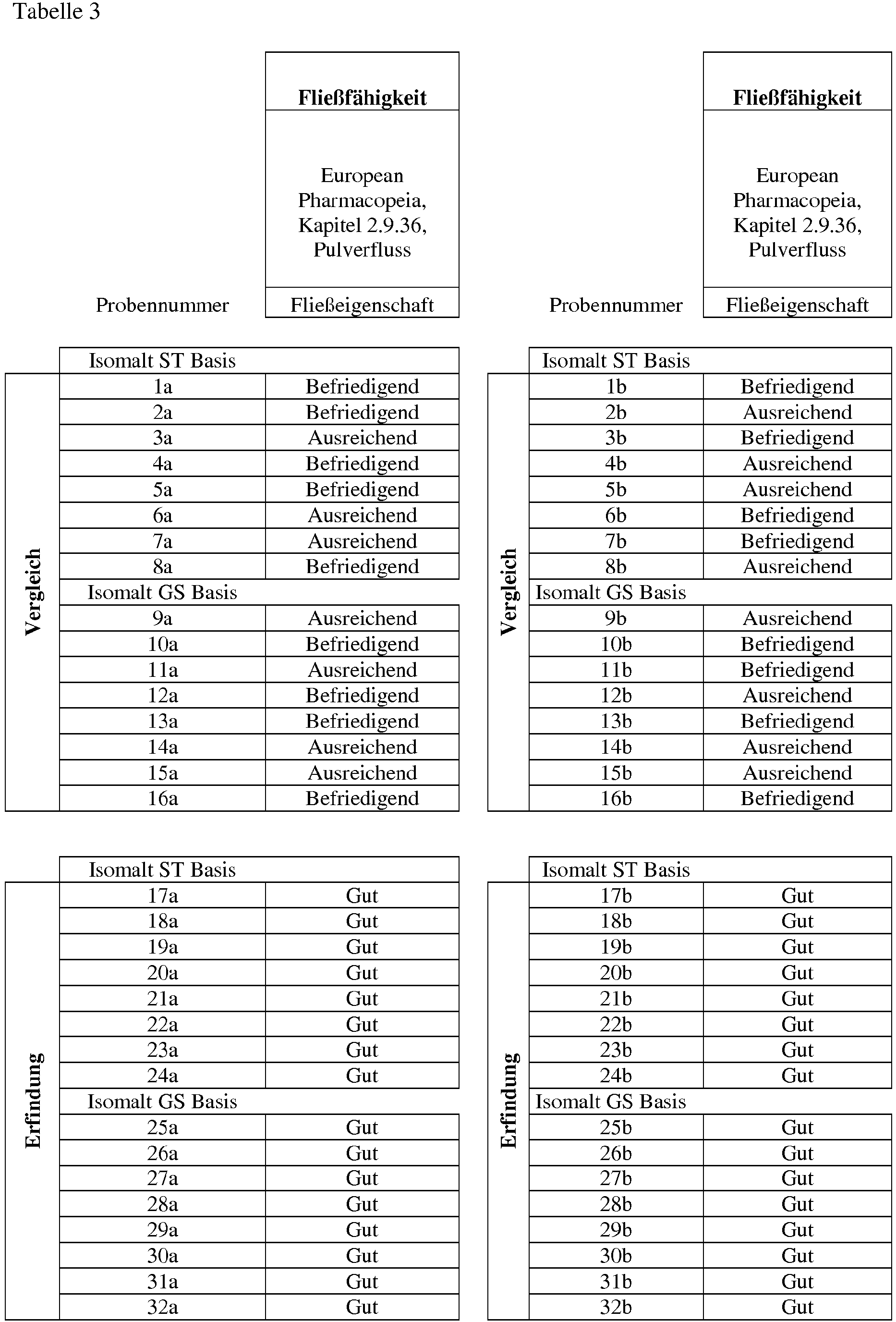

### Beispiel 4

### Fließfähigkeit nach Lagerung (Probenserie a und b)

Die Proben der Serien a und b wurden zusätzlich bei 25° C, 65 % rel. Feuchte für insgesamt 24 Wochen gelagert und die Fließfähigkeit nach 0, 2, 4, 8, 12 und 24 Wochen bestimmt. Dabei wurde bei den erfindungsgemäßen Isomalt-Zusammensetzungen (Proben 17 bis 32) eine wesentlich geringere Beeinträchtigung der exzellenten Fließfähigkeit über die Lagerzeit beobachtet im Vergleich zu den Vergleichs-Zusammensetzungen von Isomalt (Proben 1 bis 16) (siehe Tabellen 4 und 5).

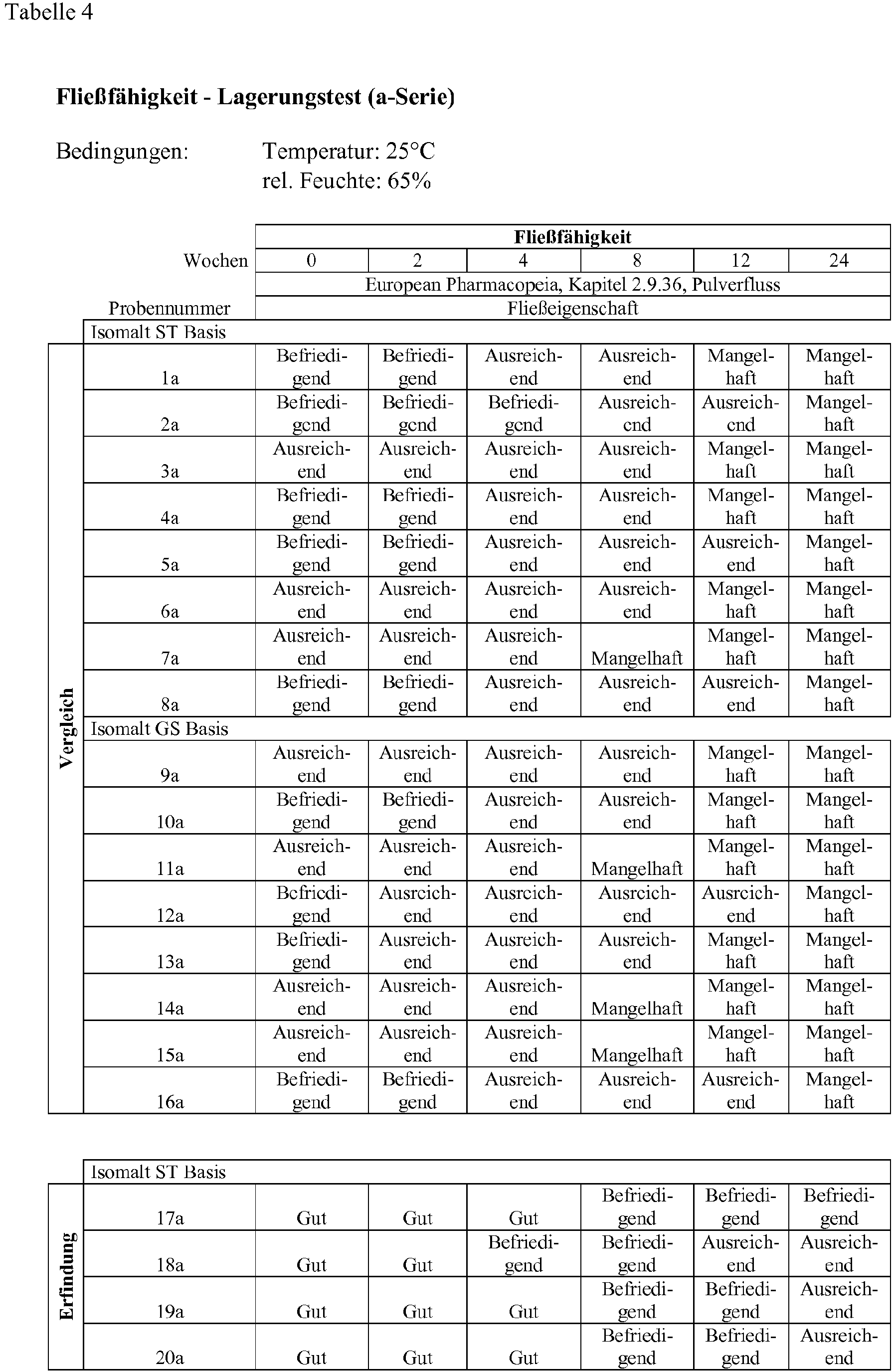

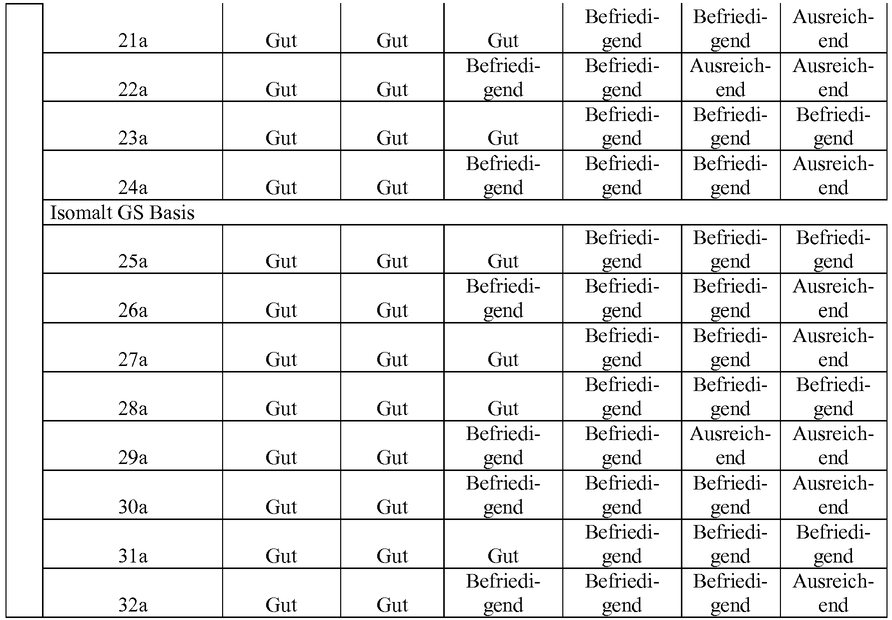

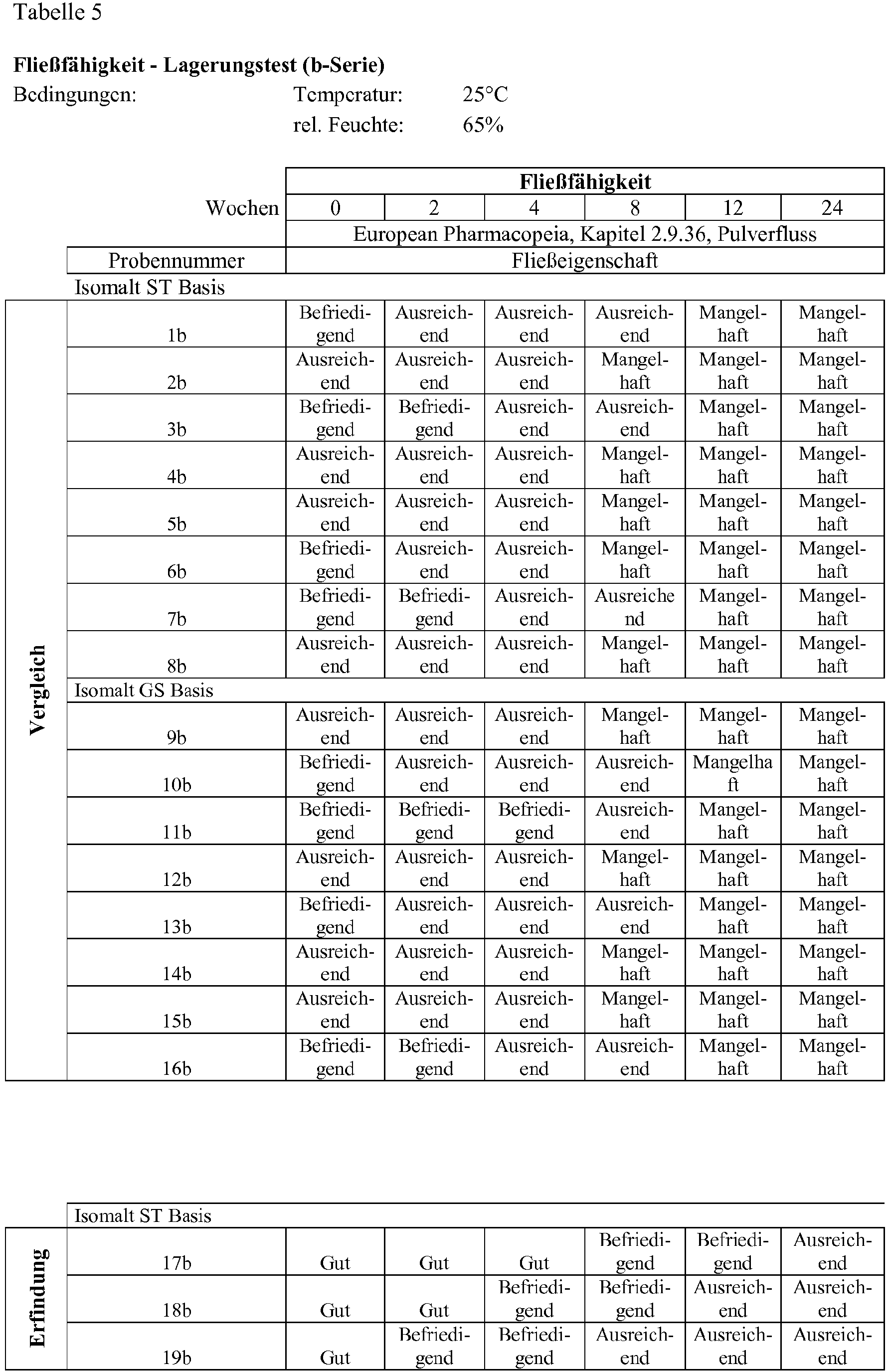

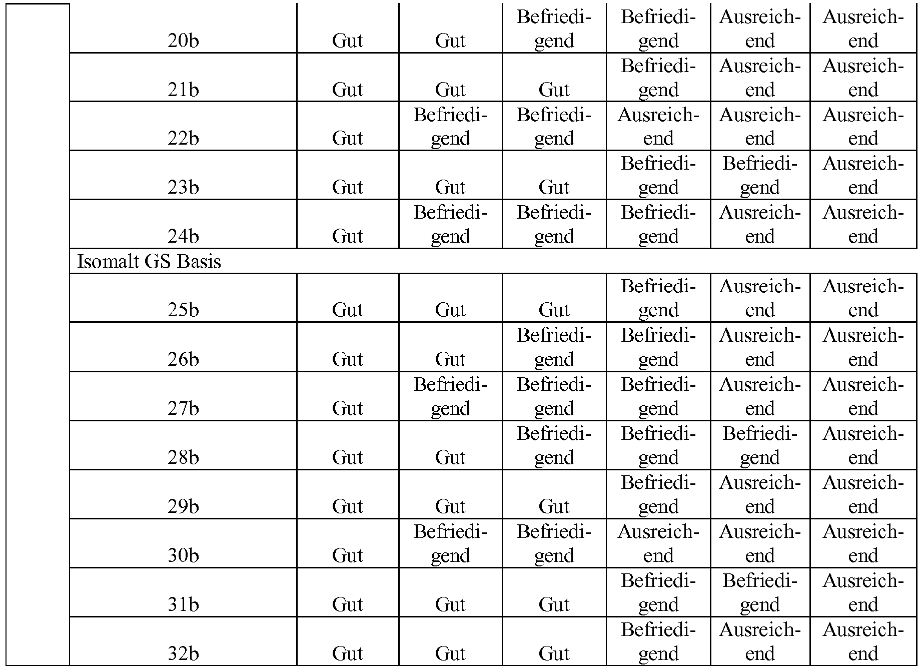

### Beispiel 5

### Untersuchung der Verbackungsneigung (Probenserie c):

Für die Ermittlung der Fließeigenschaft der Proben aus der c-Serie wird ein Verbackungstest angewandt. Dafür werden die Proben jeweils zweifach in ein zylindrisches Gefäße (Füllhöhe 2/3 der Gesamthöhe) gefüllt. Die Proben werden jeweils mit Folienscheiben abgedeckt und mit einem Stempel von 1,2 kg Masse beschwert. Zwischen Probengefäß und Stempel befindet sich ein Spalt von etwa 1 mm, damit Luftaustausch mit der Umgebung stattfinden kann. Die befüllten Probengefäße werden bei 25 °C und 65 % relativer Feuchte für die entsprechenden Zeiträume eingelagert (2, 4, 8, 12, 24 Wochen). Nach der Lagerung werden die Stempel und die Folie vorsichtig entfernt, ohne dabei die Produktoberfläche zu beschädigen. Die Proben werden aus den Probenbehältern entleert, wobei bewertet wird, ob das Produkt vollständig aus den Behältern herausrieselt und ob in der entstandenen Schüttung Klumpen enthalten sind. Eine Klassifizierung erfolgte dabei folgendermaßen:

| | |
|---|---|
| 1 | keine Klumpen vorhanden |
| 2 | Klumpen < 0,5 cm |
| 3 | Klumpen > 0,5 cm |
| 4 | Produkt durchgehend verbacken |

Die Ergebnisse ergeben sich aus nachstehender Tabelle 6.

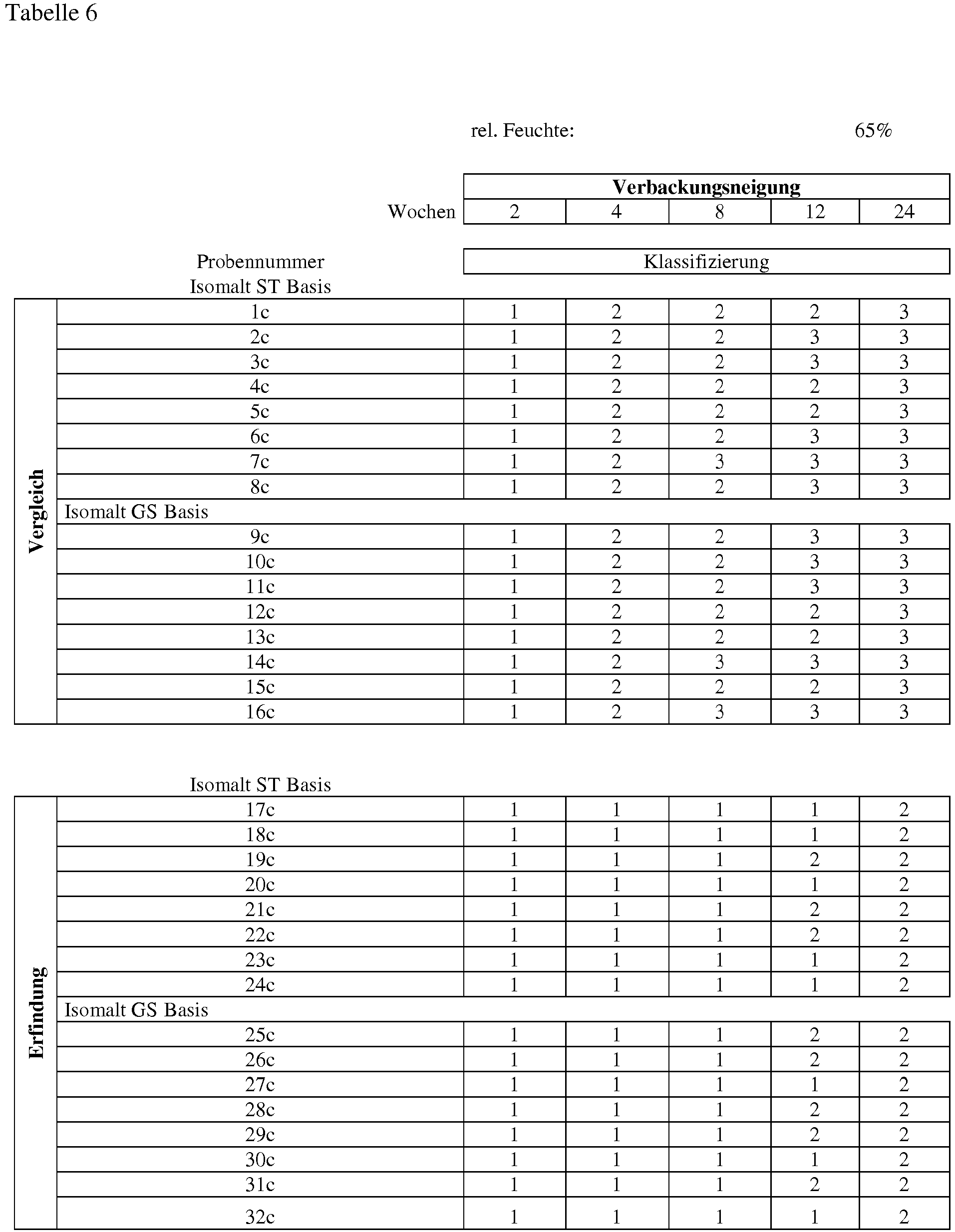

Bei den erfindungsgemäßen Isomalt-Zusammensetzungen (Proben 17 bis 32) wurde eine wesentlich geringere Beeinträchtigung der exzellenten Fließfähigkeit über die Lagerzeit beobachtet im Vergleich zu den Vergleichs-Zusammensetzungen von Isomalt (Proben 1 bis 16), insbesondere war die Verbackungsneigung erfindungsgemäßen Isomalt-Zusammensetzungen (Proben 17 bis 32) geringer im Vergleich zu den Vergleichs-Zusammensetzungen von Isomalt (Proben 1 bis 16).

## Patentansprüche

1. Feste Isomalt-Zusammensetzung, **dadurch gekennzeichnet, dass** diese die glycosylierten Isomaltkomponenten 1-O-(6'-O-alpha-D-glucopyranosyl)-alpha-D-glucopyranosyl-D-mannitol (6'-g-1,1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) und 1,6-di-O-alpha-D-glucopyranosyl-D-mannitol (6-g-1,1-GPM) aufweist, wobei das Gewichtsverhältnis von 6'-g-1,1-GPM : 6'-g-1,6-GPS : 1-g-1,6-GPS : 6-g-1,1-GPM in der Isomalt-Zusammensetzung 1:(0,7-1,3):(0,3-1,1):(1-2) beträgt (jeweils bezogen auf Gew.-% und Trockensubstanz (TS) der glycosylierten Isomalt-Komponenten).

2. Isomalt-Zusammensetzung nach Anspruch 1, wobei das Gewichtsverhältnis von 6'-g-1,1-GPM : 6'-g-1,6-GPS : 1-g-1,6-GPS : 6-g-1,1-GPM in der Isomalt-Zusammensetzung 1:(0,8-1):(0,7-1):(1,2-1,8) beträgt.

3. Isomalt-Zusammensetzung nach Anspruch 1 oder 2, wobei die Isomalt-Zusammensetzung 0,01 bis 0,2 Gew.-% 6'-g-1,1-GPM aufweist, basierend auf dem Gesamtgewicht (TS) der Isomalt-Zusammensetzung.

4. Isomalt-Zusammensetzung nach Anspruch 1 oder 2, wobei die Isomalt-Zusammensetzung 0,01 bis 0,2 Gew.-% 6'-g-1,6-GPS aufweist, basierend auf dem Gesamtgewicht (TS) der Isomalt-Zusammensetzung.

5. Isomalt-Zusammensetzung nach Anspruch 1 oder 2, wobei die Isomalt-Zusammensetzung 0,01 bis 0,2 Gew.-% 1-g-1,6-GPS aufweist, basierend auf dem Gesamtgewicht (TS) der Isomalt-Zusammensetzung.

6. Isomalt-Zusammensetzung nach Anspruch 1 oder 2, wobei die Isomalt-Zusammensetzung 0,01 bis 0,4 Gew.-% 6-g-1,1-GPM aufweist, basierend auf dem Gesamtgewicht (TS) der Isomalt-Zusammensetzung.

7. Isomalt-Zusammensetzung nach einem der vorhergehenden Ansprüche, wobei die Isomalt-Zusammensetzung mindestens 86 Gew.-% 1,6-GPS (6-O-alpha-D-glucopyranosyl-D-sorbitol) und 1,1-GPM (1-O-alpha-D-glucopyranosyl-D-mannitol) aufweist, basierend auf dem Gesamtgewicht (TS) der Isomalt-Zusammensetzung.

8. Isomalt-Zusammensetzung nach einem der vorhergehenden Ansprüche, wobei die Isomalt-Zusammensetzung mindestens 40 Gew.-% 1,6-GPS (6-O-alpha-D-glucopyranosyl-D-sorbitol) aufweist, basierend auf dem Gesamtgewicht (TS) der Isomalt-Zusammensetzung.

9. Isomalt-Zusammensetzung nach einem der vorhergehenden Ansprüche, wobei die Isomalt-Zusammensetzung 0,1 bis 1,0 Gew-% 1,1-GPS (1-O-alpha-D-glucopyranosyl-D-sorbitol) aufweist, basierend auf dem Gesamtgewicht (TS) der Isomalt-Zusammensetzung.

10. Isomalt-Zusammensetzung nach einem der vorhergehenden Ansprüche, wobei die Isomalt-Zusammensetzung 0,01 bis 2,0 Gew.-% Desoxy-Disaccharidalkohole aufweist, basierend auf dem Gesamtgewicht (TS) der Isomalt-Zusammensetzung.

11. Isomalt-Zusammensetzung nach einem der vorhergehenden Ansprüche, wobei die Isomalt-Zusammensetzung 0,01 bis 2,0 Gew.-% Glucosylglycitole aufweist, basierend auf dem Gesamtgewicht (TS) der Isomalt-Zusammensetzung.

12. Isomalt-Zusammensetzung nach einem der vorhergehenden Ansprüche, wobei die Isomalt-Zusammensetzung 0,01 bis 0,3 Gew.-% Mannit aufweist, basierend auf dem Gesamtgewicht (TS) der Isomalt-Zusammensetzung.

13. Isomalt-Zusammensetzung nach einem der vorhergehenden Ansprüche, wobei die Isomalt-Zusammensetzung 0,01 bis 0,4 Gew.-% Sorbit aufweist, basierend auf dem Gesamtgewicht (TS) der Isomalt-Zusammensetzung.

14. Isomalt-Zusammensetzung nach einem der vorhergehenden Ansprüche, wobei die Isomalt-Zusammensetzung eine Partikelgrößenverteilung von mindestens 90% der Partikel mit einer Größe von höchstens 1000 µm aufweist.

15. Isomalt-Zusammensetzung nach einem der vorhergehenden Ansprüche, wobei die Isomalt-Zusammensetzung eine Partikelgrößenverteilung von mindestens 90% der Partikel mit einer Größe von 100 bis 1000 µm aufweist.

16. Isomalt-Zusammensetzung nach einem der vorhergehenden Ansprüche, wobei der Wassergehalt 2 bis 6 Gew.-% beträgt, basierend auf dem Gesamtgewicht der Isomalt-Zusammensetzung.

17. Verwendung der Isomalt-Zusammensetzung nach einem der Ansprüche 1 bis 16 als Nahrungs- oder Genussmittel.

## Claims

1. Solid isomalt composition **characterized in that** it has the glycosylated isomalt components 1-O-(6'-O-alpha-D-glucopyranosyl)-alpha-D-glucopyranosyl-D-mannitol (6'-g-1,1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) and 1,6-di-O-alpha-D-glucopyranosyl-D-mannitol (6-g-1,1-GPM), wherein the weight ratio of 6'-g-1,1-GPM : 6'-g-1,6-GPS : 1-g-1,6-GPS : 6-g-1,1-GPM in the isomalt composition is 1:(0.7-1.3):(0.3-1.1):(1-2) (in each case based on wt.-% and dry matter (DM) of the glycosylated isomalt components).

2. Isomalt composition according to claim 1, wherein the weight ratio of 6'-g-1,1-GPM : 6'-g-1,6-GPS : 1-g-1,6-GPS : 6-g-1,1-GPM in the isomalt composition is 1:(0.8-1):(0.7-1):(1.2-1.8).

3. Isomalt composition according to claim 1 or 2, wherein the isomalt composition has 0.01 to 0.2 wt.-% 6'-g-1,1-GPM, based on the total weight (DM) of the isomalt composition.

4. Isomalt composition according to claim 1 or 2, wherein the isomalt composition has 0.01 to 0.2 wt.-% 6'-g-1,6-GPS, based on the total weight (DM) of the isomalt composition.

5. Isomalt composition according to claim 1 or 2, wherein the isomalt composition has 0.01 to 0.2 wt.-% 1-g-1,6-GPS, based on the total weight (DM) of the isomalt composition.

6. Isomalt composition according to claim 1 or 2, wherein the isomalt composition has 0.01 to 0.4 wt.-% 6-g-1.1-GPM, based on the total weight (DM) of the isomalt composition.

7. Isomalt composition according to any one of the preceding claims, wherein the isomalt composition has at least 86 wt.-% 1,6-GPS (6-O-alpha-D-glucopyranosyl-D-sorbitol) and 1,1-GPM (1-O-alpha-D-glucopyranosyl-D-mannitol), based on the total weight (DM) of the isomalt composition.

8. Isomalt composition according to any one of the preceding claims, wherein the isomalt composition has at least 40 wt.-% of 1,6-GPS (6-O-alpha-D-glucopyranosyl-D-sorbitol), based on the total weight (DM) of the isomalt composition.

9. Isomalt composition according to any one of the preceding claims, wherein the isomalt composition has 0.1 to 1.0 wt.-% 1,1-GPS (1-O-alpha-D-glucopyranosyl-D-sorbitol), based on the total weight (DM) of the isomalt composition.

10. Isomalt composition according to any one of the preceding claims, wherein the isomalt composition has 0.01 to 2.0 wt.-% of deoxy-disaccharide alcohols, based on the total weight (DM) of the isomalt composition.

11. Isomalt composition according to any one of the preceding claims, wherein the isomalt composition has 0.01 to 2.0 wt.-% glucosylglycitols, based on the total weight (DM) of the isomalt composition.

12. Isomalt composition according to any one of the preceding claims, wherein the isomalt composition has 0.01 to 0.3 wt.-% mannitol, based on the total weight (DM) of the isomalt composition.

13. Isomalt composition according to any one of the preceding claims, wherein the isomalt composition has 0.01 to 0.4 wt.-% sorbitol, based on the total weight (DM) of the isomalt composition.

14. Isomalt composition according to any one of the preceding claims, wherein the isomalt composition has a particle size distribution of at least 90% of the particles having a size of at most 1000 µm.

15. Isomalt composition according to any one of the preceding claims, wherein the isomalt composition has a particle size distribution of at least 90% of the particles having a size of 100 to 1000 µm.

16. Isomalt composition according to any one of the preceding claims, wherein the water content is 2 to 6 wt.-%, based on the total weight of the isomalt composition.

17. Use of the isomalt composition according to any one of claims 1 to 16 as a food or stimulant.

## Revendications

1. Composition solide d'isomalt **caractérisée en ce qu'**elle a les composants isomalt glycosylés 1-O-(6'-O-alpha-D-glucopyranosyl)-alpha-D-glucopyranosyl-D-mannitol (6'-g-1, 1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) et 1,6-di-O-alpha-D-glucopyranosyl-D-mannitol (6-g-1,1-GPM), dans lequel le rapport pondéral de 6'-g-1,1-GPM : 6'-g-1,6-GPS : 1-g-1,6-GPS : 6-g-1,1-GPM dans la composition d'isomalt est de 1:(0,7-1,3) :(0,3-1,1) :(1-2) (dans chaque cas sur la base % en poids et matière sèche (MS) des composants isomalt glycosylés).

2. Composition d'isomalt selon la revendication 1, dans laquelle le rapport pondéral de 6'-g-1,1-GPM : 6'-g-1,6-GPS : 1-g-1,6-GPS : 6-g-1,1-GPM dans la composition d'isomalt est 1 :(0,8-1) :(0,7-1) :(1,2-1,8).

3. Composition d'isomalt selon la revendication 1 ou 2, dans laquelle la composition d'isomalt a 0,01 à 0,2 % en poids de 6'-g-1,1-GPM, sur la base du poids total (MS) de la composition d'isomalt.

4. Composition d'isomalt selon la revendication 1 ou 2, dans laquelle la composition d'isomalt a 0,01 à 0,2 % en poids de 6'-g-1,6-GPS, sur la base du poids total (MS) de la composition d'isomalt.

5. Composition d'isomalt selon la revendication 1 ou 2, dans laquelle la composition d'isomalt a 0,01 à 0,2 % en poids de 1-g-1,6-GPS, sur la base du poids total (MS) de la composition d'isomalt.

6. Composition d'isomalt selon la revendication 1 ou 2, dans laquelle la composition d'isomalt a 0,01 à 0,4 % en poids de 6-g-1,1-GPM, sur la base du poids total (MS) de la composition d'isomalt.

7. Composition d'isomalt selon l'une quelconque des revendications précédentes, dans laquelle la composition d'isomalt a au moins 86% en poids de 1,6-GPS (6-O-alpha-D-glucopyranosyl-D-sorbitol) et de 1,1-GPM (1-O-alpha-D-glucopyranosyl-D-mannitol), par rapport au poids total (MS) de la composition d'isomalt.

8. Composition d'isomalt selon l'une quelconque des revendications précédentes, dans laquelle la composition d'isomalt a au moins 40% en poids de 1,6-GPS (6-O-alpha-D-glucopyranosyl-D-sorbitol), par rapport au poids total (MS) de la composition d'isomalt.

9. Composition d'isomalt selon l'une quelconque des revendications précédentes, dans laquelle la composition d'isomalt a 0,1 à 1,0 % en poids de 1,1-GPS (1-O-alpha-D-glucopyranosyl-D-sorbitol), par rapport au poids total (MS) de la composition d'isomalt.

10. Composition d'isomalt selon l'une quelconque des revendications précédentes, dans laquelle la composition d'isomalt a 0,01 à 2,0% en poids d'alcools désoxy-disaccharides, par rapport au poids total (MS) de la composition d'isomalt.

11. Composition d'isomalt selon l'une quelconque des revendications précédentes, dans laquelle la composition d'isomalt comprend 0,01 à 2,0 % en poids de glucosylglycitols, par rapport au poids total (MS) de la composition d'isomalt.

12. Composition d'isomalt selon l'une quelconque des revendications précédentes, dans laquelle la composition d'isomalt a 0,01 à 0,3% en poids de mannitol, par rapport au poids total (MS) de la composition d'isomalt.

13. Composition d'isomalt selon l'une quelconque des revendications précédentes, dans laquelle la composition d'isomalt a 0,01 à 0,4 % en poids de sorbitol, par rapport au poids total (MS) de la composition d'isomalt.

14. Composition d'isomalt selon l'une quelconque des revendications précédentes, dans laquelle la composition d'isomalt a une distribution granulométrique d'au moins 90% des particules ayant une taille d'au plus 1000 µm.

15. Composition d'isomalt selon l'une quelconque des revendications précédentes, dans laquelle la composition d'isomalt a une distribution granulométrique d'au moins 90% des particules ayant une taille de 100 à 1000 µm.

16. Composition d'isomalt selon l'une quelconque des revendications précédentes, dans laquelle la teneur en eau est de 2 à 6 % en poids, par rapport au poids total de la composition d'isomalt.

17. Utilisation de la composition d'isomalt selon l'une quelconque des revendications 1 à 16 comme aliment ou stimulant.
